# EUROPEAN PATENT APPLICATION

(11) **EP 4 811 070 A1**
(43) Date of publication of application: **23.09.2026**
(21) Application number: 25165301.0
(22) Date of filing: 21.03.2025
(51) Int. Cl.: G05D 1/693, E02F 9/20, G05D 1/698, G08G 1/00, G05D 105/05, G05D 107/70, G05D 109/10

(54) **CONTROLLING MOVEMENT OF MINING VEHICLE BASED ON POSITION OF MANUALLY OPERATED VEHICLE**

(71) Applicant: SANDVIK MINING AND CONSTRUCTION OY, 33330 Tampere (FI)
(72) Inventor: SNELLMAN, Olli, 33330 Tampere (FI)
(74) Representative: Sandvik

(57) **Abstract**

An apparatus comprises: at least one processor; and at least one memory including computer program code, the at least one memory and the computer program code configured to, with the at least one processor, cause the apparatus at least to: determine a route for a manually operated vehicle, wherein at least part of the route is in a restricted area of a mine; transmit a configuration of the route to the manually operated vehicle; monitor a position of the manually operated vehicle; and cause a restriction of movement for at least one autonomous mining vehicle configured to operate in the restricted area, in response to determining that the position of the manually operated vehicle deviates from the route within the restricted area.

## Description

### TECHNICAL FIELD

Various example embodiments generally relate to the field of autonomous mining machines and the control thereof. Some example embodiments relate to controlling movement of at least one autonomous mining vehicle machine based on manual vehicle traffic in autonomous vehicle area.

### BACKGROUND

In various fields of technology, such as for example mining, it may be desired to automate operations of machines such as vehicles. However, there may be situations where manual vehicles need to have access to an area restricted to autonomous vehicles.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling at least one autonomous mining vehicle is disclosed. The apparatus may comprise: at least one processor; and at least one memory including computer program code, the at least one memory and the computer program code configured to, with the at least one processor, cause the apparatus at least to: determine a route for a manually operated vehicle, wherein at least part of the route is in a restricted area of a mine; transmit a configuration of the route to the manually operated vehicle; monitor a position of the manually operated vehicle wherein the scanning device is configured to provide scanning data to a navigation application of the mining machine; and cause a restriction of movement for at least one autonomous mining vehicle configured to operate in the restricted area, in response to determining that the position of the manually operated vehicle deviates from the route within the restricted area.

According to a second aspect, a system for controlling at least one autonomous mining vehicle is disclosed. The system may comprise: a control room system comprising the apparatus according to the first aspect; a control kit configured to be coupled to a manually operated vehicle, the control kit comprising: a positioning device configured to determine a position of the manually operated vehicle; and a transceiver configured to receive a configuration of a route for the manually operated vehicle and to transmit an indication of the position of the manually operated vehicle to the control room system.

According to a third aspect, a method for controlling at least one autonomous mining vehicle is disclosed. The method may comprise: determining a route for a manually operated vehicle, wherein at least part of the route is in a restricted area of a mine; transmitting a configuration of the route to the manually operated vehicle; monitoring a position of the manually operated vehicle; and causing a restriction of movement for at least one autonomous mining vehicle configured to operate in the restricted area, in response to determining that the position of the manually operated vehicle deviates from the route within the restricted area.

According to a fourth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: determine a route for a manually operated vehicle, wherein at least part of the route is in a restricted area of a mine; transmit a configuration of the route to the manually operated vehicle; monitor a position of the manually operated vehicle; and cause a restriction of movement for at least one autonomous mining vehicle configured to operate in the restricted area, in response to determining that the position of the manually operated vehicle deviates from the route within the restricted area.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a loader;
FIG. 2 illustrates an example of a drill rig;
FIG. 3 illustrates an example of a loader communicatively coupled to a remote control device;
FIG. 4 illustrates an example of a flow chart for controlling movement of mining vehicle(s) based on position(s) of manually operated vehicles;
FIG. 5 illustrates an example of a map of a mine with a route for a manually operated vehicle;
FIG. 6 illustrates an example of an apparatus configured to practise one or more example embodiments; and
FIG. 7 illustrates an example of a method for controlling a mining vehicle.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

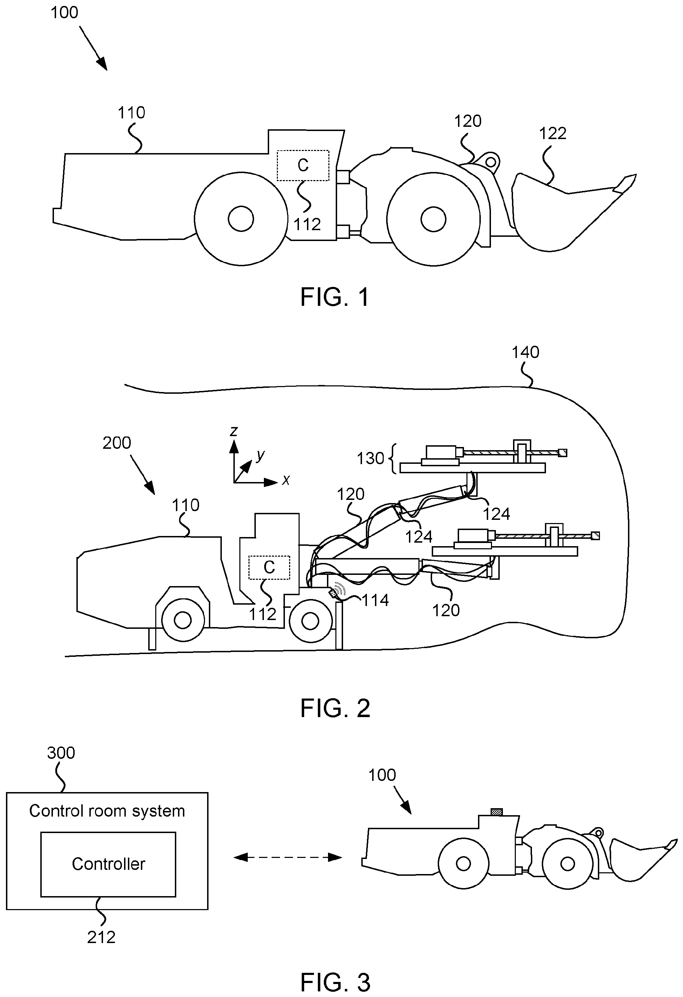

FIG. 1 illustrates an example of a loader. Even though loader 100 is illustrated in FIG. 1, it is understood that example embodiments of the present disclosure may also be applied to other type of mining vehicles, for example mobile bolter machines, underground drill rigs (cf., FIG. 2), and surface drill rigs.

Loader 100 may be an automated mining machine, for example an automated vehicle, e.g., a mining vehicle, equipped with tools configured for loading and transporting material. Loading may comprise filling a container, e.g., bucket 122, of a mining machine with mining material (e.g., rock or minerals). Unloading may comprise releasing the mining material from the container, for example to ground or floor of a tunnel. An automated vehicle operating in an automatic mode may be configured to, for example, receive a task to be performed, perceive (portions) of the environment of the automated vehicle, and autonomously perform the task while taking the environment into account. An automated vehicle operating in an automatic mode may be configured to operate independently but may be taken under external control at certain operation areas or conditions, such as during states of emergencies. Example embodiments of the present disclosure may be however applied also in non-autonomous or semi-autonomous loader machines, for example remote-controlled loader machines, as well as other type of non-autonomous or semi-autonomous mining machines.

Loader 100 may comprise a movable carrier 110 and at least one boom 120 connected to movable carrier 110. Loader 100 may comprise a bucket 122, for example coupled to boom 120. Movable carrier 110 may comprise equipment for moving loader 100, such as for example a motor and wheels. Movable carrier 110 may be configured to move autonomously or it may be configured to be controlled by a human operator, either remotely or locally at loader 100. Boom 120 and bucket 122 may be configured to be controlled with, for example, mechanical switches or manual controllers installed at a user interface of loader 100 or by a controller 112 (e.g., a control apparatus) configured to control operation(s) of loader 100. Controller 112 may be also configured to control other aspects of loader 100, such as parts of movable carrier 110 like the motor and wheels.

Controller 112 may comprise a navigation application configured to control, or enable a human operator to control, navigation of loader 100, for example to move loader 100 to loading or unloading. In general, the navigation application may be configured to control movement of loader 100, or any other type of mining machine. Alternatively, the navigation application may be external to controller 112, for example located at another component of loader 100 or at a server external to loader 100.

FIG. 2 illustrates another example of mining vehicle, in this case a drill rig. Drill rig 200 may comprise component(s) similar to loader 100 of FIG. 1, for example movable carrier 110 and boom(s) 120 connected thereto, and/or equipment for moving or stabilising the drill rig (e.g., motor, wheels, and/or stabilizer jack(s)). Drill rig 200 may comprise drilling unit(s) 130. Drilling unit 130 may comprise equipment for drilling holes in drilling surface 140. Drilling unit 130 may for example comprise a drill rod and a feed beam configured to enable a drill bit to be applied to drilling surface 140 in order to drill a hole. Even though two booms 120 have been illustrated in FIG. 2, drill rig 200 may generally comprise one or a plurality (e.g., two, three, four,...) of booms 120. Boom(s) 120 may comprise a plurality of boom parts coupled to each other, movable carrier 110, and/or drilling unit 130 by joint(s) 124. Controllable joints 124 enable drilling unit 130 to be placed at a desired position and orientation with respect to drilling surface 140. Drill rig 200 may comprise one or more of the parts described above, or other tool(s) or equipment relevant for a drill rig. As already described with reference to FIG. 1, also drill rig 200 may comprise controller (C) 112.

Controller 112 may comprise, or be communicatively coupled to, various functions, blocks, or applications for implementing functionality of controller 112. For example, controller 112 may comprise or be communicatively coupled to a data management server, which may be configured to store information on functions to be performed by drill rig 200, such as the drilling plan, drilling cycle, tunnel lines, point cloud or mesh presentations of tunnel lines or profiles, a mine map point cloud, or the like; or in general representation(s) of the working environment of drill rig 200. Controller 112 may be alternatively located external to loader 100 and configured to remotely control loader 100

FIG. 3 illustrates an example of a loader communicatively coupled to a control room system 300. Loader 100 is used herein to represent any type of mining vehicle, for example a surface drill rig, a track-mounted drill rig, an underground drill rig, a mobile bolter machine, a mesh installation rig, rock drill rig, a mining drill rig, a surface rock drill rig, an underground rock drill rig, or any other type of mining machine.

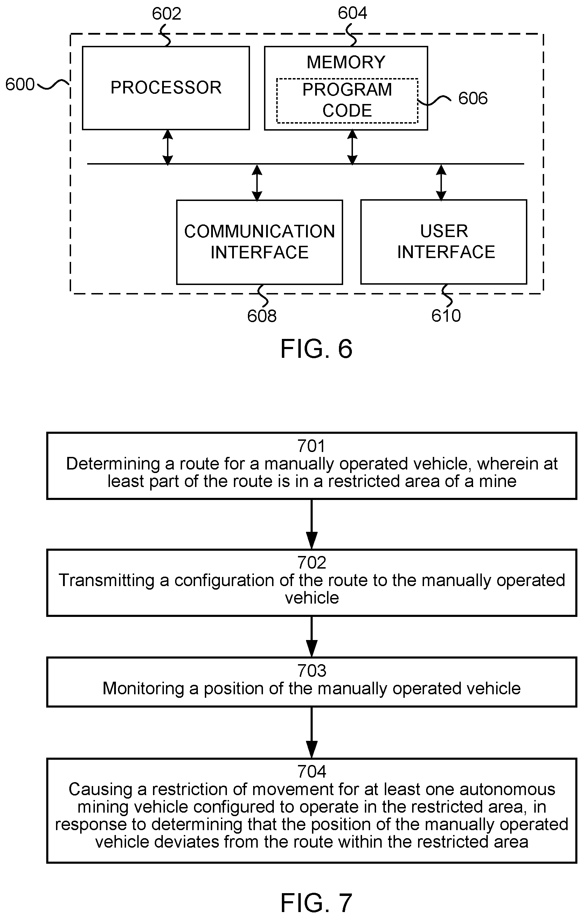

Control room system 300 may comprise a server or other computing device located remote from loader 100. Control room system 300 may comprise a controller 212, which may be structurally similar to controller 112. Information may be exchanged between controller 212 and loader 100 over an internal or external data communication interface, including any suitable wireless or wired connection. Examples of suitable communication interfaces are described with reference to FIG. 6.

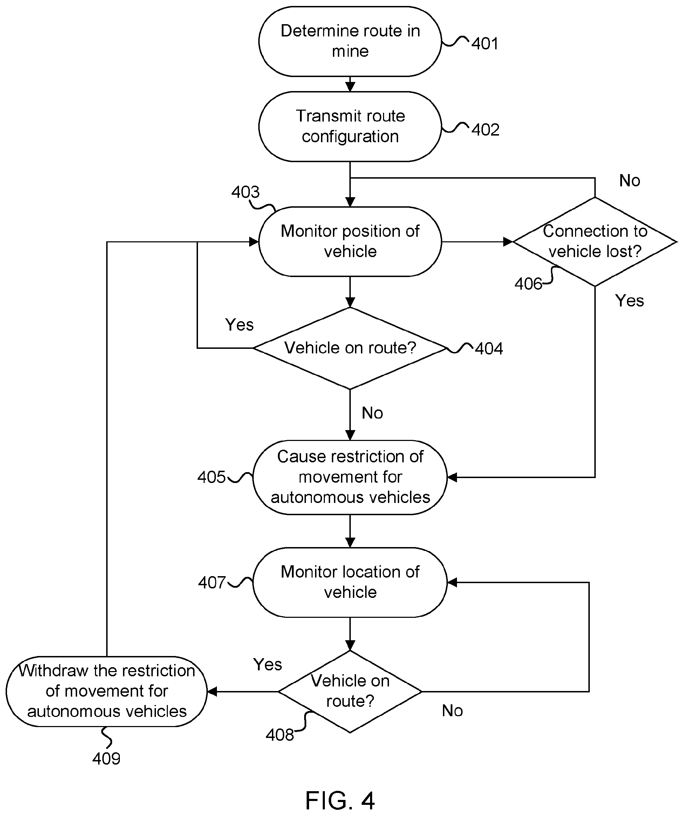

FIG. 4 illustrates an example of a flow chart for controlling at least one mining vehicle, such as loader 100 or drill rig 200. Operations of FIG. 4 may be configured to be performed, for example, by controller 212, or in general by any suitable device or software component. Controller 212 may be located in a control room for controlling operation autonomous mining vehicles. For example, controller 212 may be provided as part of control room system 300. Even though operations of FIG. 4 have been described for controlling a single vehicle, controller 212 may be configured to control multiple mining machines, for example autonomous mining machines or vehicles.

At operation 401, controller 212 may be configured to determine a route for a manually operated vehicle, for example in an area for autonomous vehicles. A manually operated vehicle may be manually operated by a human operator, for example a driver inside the vehicle or via a remote control device. Manually operating a mining vehicle may comprise manually operating function(s) or component(s) of the mining vehicle. A manually operated vehicle may be also referred to as a manual vehicle. It is however noted that also a semi-autonomous mining vehicle may be manually operated, for example in a manual operating mode of the vehicle. Any such vehicles are intended to be covered by terms manually operated vehicle or manual vehicle. An area for autonomous vehicles may comprise a restricted area of a mine, since manual traffic might not be allowed in an area for autonomous traffic in a mine, for example due to safety reasons. Controller 212 may be configured to determine the route based on one or more different factors, such as where in the mine the manual vehicle needs to go, where there is a lot of activity in the mine at the time in question for the manual vehicle to enter the mine, or shortest distance to the end point of the route, for example. For example, controller 212 may be configured to determine the route based on a target location such as a dump point, load point, or a drilling location, e.g., such that the route ends at the target location, or based on an amount of traffic in the mine, for example the restricted area of the mine. Controller 212 may be configured to determine the route based on available mapping information or calculate the route from scratch. Alternatively, or additionally, controller 212 may be configured to determine the route based on receiving a configuration of the route from another device, for example from an external server, or via a user interface.

At least a part of the route may be in a restricted part of the mine. The route may therefore be located in the restricted area either partly or completely. The restricted part of the mine may comprise an isolated area of the mine, for example protected by passage control unit(s) such as safety gate(s). A passage control unit may comprise a physical access barrier for restricting access by mining vehicles or other work machines to the isolated area and/or preventing unauthorized personnel from entering the isolated area when one or more mobile mining machines are operating within the isolated area. A passage control unit may further comprise at least one detection device for detecting people and/or vehicles entering and/or exiting the isolated area. A detection device may comprise, for example, a light curtain, or some other suitable detection device. At least some of the isolated areas may be isolated by their respective separating passage control units, enabling autonomous operation of one or more mining vehicles within the isolated area. One or more passage control units may be comprised in a safety system which may be configured to monitor safety of the isolated working area. Further, the one or more passage control units may be operatively coupled to a monitoring system that is configured to monitor the mine.

The restricted part of the mine may therefore comprise a part of the mine trafficked by autonomous vehicles, or a part of a mine where autonomous vehicles may occur. A restricted part of the mine may thus be a part of the mine which manual vehicles might not be permitted to enter, if autonomous vehicles are operating in the mine at the same time. Manual traffic might not be allowed in parts of a mine where autonomous vehicles are operating at the same time, for example due to safety reasons. In order for manual vehicles to be allowed to enter, traffic of autonomous vehicles might need to be stopped, for example in order to prevent collisions between manually operated vehicles and mining machines.

The determination of the route for the manual vehicle may result in more than one possible route. In this case one route may be selected as the route for the manual vehicle. The route determined for the manual vehicle may be such, that the manual vehicle may, when on the route safely, reach the end point of its route without running into any autonomous vehicles but may safely reach its target location in the mine without a need of stopping or restricting operations in the restricted area of the mine during the journey of the manual vehicle.

At operation 402, controller 212 may be configured to transmit the result of the determination of the route to the manual vehicle as a route configuration for the vehicle in question. The route configuration may include the route for the manual vehicle inside the mine, such as directions on how to drive, where to turn, and so on. For example, the route configuration may comprise an indication of route points, e.g., positions of the route points in a coordinate system of the mine, requested speed information for the route, checkpoint information, e.g., positions of checkpoints at which the manual vehicle is required to wait until receiving a permission to continue travelling through the route. The instructions may be in electronic form, such as navigational instructions targeted to a handheld device, such as a mobile phone or tablet, or to any system where the route or instructions for navigation can be made visible or otherwise known to the operator or driver of the manual vehicle. The operator of the manual vehicle is then required to follow the route in question in the restricted part of the mine. The route may be presented as a map, a route indicated on a map or as instructions when to turn and how far to go in a certain direction, or in any other manner that is understandable for an operator of a manual vehicle.

At operation 403, upon entering the restricted area of the mine, controller 212 may be configured to monitor the position of the manual vehicle, for example upon entering the restricted area of the mine. The manual vehicle, or a control kit configured to be coupled thereto, may comprise a positioning device for monitoring the position of the manual vehicle. The positioning device may be configured to determine a position of the manually operated vehicle. The position of the manual vehicle may be positioned in various ways.

For example, the control kit may comprise scanning device(s) for capturing and providing a representation of objects around the manual vehicle. The scanning device(s) may comprise, for example, one or more of the following: one or more cameras, one or more radio detection and ranging (radar) sensors, or one or more light detection and ranging (lidar) sensors. Based on the scanning, the control kit may be configured to obtain point cloud data that represents the scanned environment. The point cloud data may for example comprise a three-dimensional representation of the objects observable in the environment of dumper 100. The scanning may be implemented, for example, with a simultaneous localization and mapping (SLAM) system, which may be configured to scan environment of the manual vehicle to obtain point cloud data of surrounding surfaces or objects and to detect the position of the manual vehicle. The obtained point cloud data may be used for determining position of the manual vehicle based on comparing the scanning data to reference data, such as for example a 3D model of a mining tunnel.

Controller 212 may be configured to monitor the position of the manual vehicle inside the restricted area of the mine based on a signal received from the control kit. The signal may comprise an indication of the position, e.g., current or latest detected position, of the manual vehicle. When the manual vehicle enters the restricted part of the mine a signal from the manual vehicle may be detected by controller 212 and upon this detection the position of the manual vehicle inside the restricted area of the mine may be monitored. The signal from the manual vehicle may then be monitored either continuously or by a certain interval by the controller 212, in order to determine whether the manual vehicle stays on the predetermined route or deviates from it. Monitoring may be carried out during the time when the manual vehicle is inside the mine in the restricted area of the mine or optionally during the entire time the vehicle is in the mine, also outside the restricted area. Controller 212, which in this case may be located at the control room, may be configured to monitor the movement and the position of the manual vehicle. Controller 212 may be configured to determine, e.g., for particular moments in time, whether the manual vehicle is still on route, or whether a deviation of the position of the manual vehicle from the route is detected, for example by monitoring the signal received from the manual vehicle.

At operation 404, controller 212 may be configured to determine whether the vehicle is on the determined route or not. A deviation from the route may comprise one or more driving-related parameters of the manual vehicle differing from the configuration of the route. Position of the manual vehicle is an example of such driving-related parameter. A deviation may comprise a difference between the position of the manual vehicle and a position of a route point of the route, e.g., the minimum distance between the current position of the mining vehicle and the position of the route point, which is closest to the manual vehicle. Controller 212 may be configured to determine that the manual vehicle is not on the route, in response to determining that the deviation of the position of the manual vehicle from the route exceeds a threshold (e.g. a distance threshold). A deviation from the route may mean that the manual vehicle has turned in another direction than that of determined route, that the manual vehicle is a predetermined distance (e.g., greater than or equal to 5 m, such as 10 m, 20 m, or more) away from the route, even if travelling in the correct direction or is moving in an incorrect direction not enclosed by the determined route. Controller 212 may be configured to constantly or with certain intervals such as one or two seconds, monitor the position of the manual vehicle and determine whether it is on route or not. Controller 212 may be configured to continue the monitoring as long as the manual vehicle is on route.

At operation 405, controller 212 may be configured to cause a restriction of movement of at last one autonomous vehicle in the restricted part of the mine entered by the manual vehicle if the controller 212 determines the manual vehicle to deviate from the determined route or not being on the determined route. A restriction of movement may comprise a restriction of any movement of the autonomous mining vehicle, such as slowing in movement, stopping of the autonomous vehicle, stopping drilling or loading or unloading by a loader or the like. Controller 212 may be configured to cause the restriction of movement of one or more autonomous vehicles by transmitting a command to at least one autonomous mining vehicle. The command may be received by controller 112 of the autonomous mining vehicle. Controller 112 may then cause the restriction of movement to the autonomous mining vehicle. A restriction of movement command may be sent to a single autonomous mining vehicle or more than one, if there are more in the area where the manual vehicle is moving. A restriction of movement command may also be sent to all autonomous mining vehicles in the mine.

At operation 405 controller 212 may be configured to transmit the restriction of movement command is to one or more autonomous mining vehicles, in response to detecting that a connection to the manual vehicle is lost at operation 406, e.g., when the manual vehicle is in a restricted area of the mine. Controller 212 may be configured to cause the command of restriction of movement to be first sent to the autonomous mining vehicle or vehicles closest (e.g., within a predetermined distance) to the last known position of the manual vehicle. Controller 212 may be configured to transmit a restriction of movement command to more than one or all autonomous mining vehicles in the mine, if the connection to the manual vehicle is not reestablished in a predetermined time interval. Controller 212 may be configured to send, or cause sending of, a restriction of movement command to a subset of one more autonomous mining vehicles (e.g., by addressing the command to this subset) based on distance(s) between the manual vehicle and the autonomous mining vehicle(s) of that subset, e.g., to autonomous mining machines within a threshold distance from the manual vehicle. The restriction of movement command may comprise instructions to restrict movement of one or more autonomous mining vehicles. For example, the restriction of movement command may first be sent to the autonomous mining vehicles reachable by the manual vehicle within 10-30 seconds, then to the autonomous mining vehicles within 31-60 seconds and then, if contact to the manual vehicle is nor reestablished a command of stopping all movement by autonomous mining vehicles may be sent. This provides the benefit of avoiding unnecessarily restricting operation of autonomous mining vehicles, while still enabling to ensure safe operation in the restricted area of the mine.

At operation 407, controller 212 may be configured to continue monitoring the position of the manual vehicle which has deviated from the determined route. Controller 212 may be configured to monitor the position of the manual vehicle. Controller 212 may be configured to cause additional restriction of movement commands to be sent to further autonomous mining vehicles, if the manual vehicle is still deviating from the route and/or if determined that the manual vehicle is in the area of their operation. Also, controller 212 may be configured to monitor a manual vehicle to which connection has been lost in order to reestablish connection to the vehicle. Controller 212 may be configured to attempt reestablishment of the connection as long as contact is lost to the manual vehicle. If contact is reestablished, monitoring of position of the manual vehicle may be continued by controller 212.

At operation 408, if controller 212 determines, based on the monitoring of the manual vehicle, that the manual vehicle is still not or the determined route, monitoring may be continued at operation 407. Also, at operation 407 controller 212 may be configured to send further command(s) to restrict the movement of autonomous mining vehicles, or a subset thereof. At operation 409, controller 212 may be configured to withdraw the restriction of movement, in response to determining that the position of the manually operated vehicle no longer deviates from the route within the restricted area of the mine, for example if controller 212 discovers that the manual vehicle has returned to its route, or that connection to the manual vehicle is reestablished and that the manual vehicle is on the determined route. For example, controller 212 may be configured to cause transmission of a withdrawal command to the autonomous mining vehicles which have earlier received a command of restriction of movement. The command sent at this point enables to resume operations. When this command is sent to the controller 112 of the mining vehicle or vehicles in question, controller 212 may resume or continue monitoring the position of the manual vehicle at operation 403.

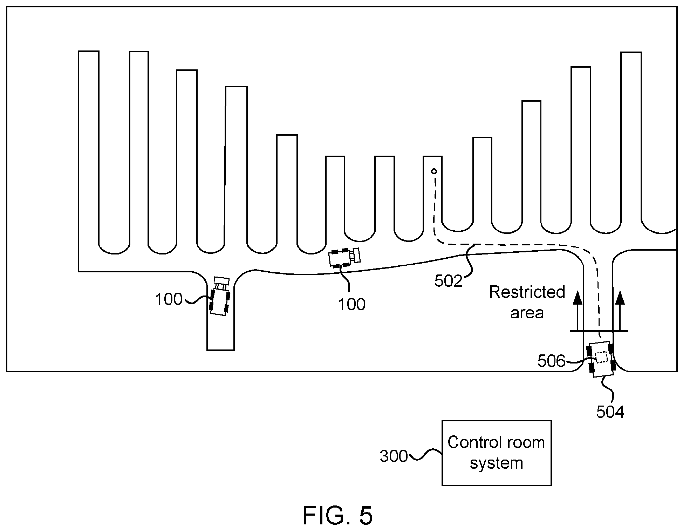

FIG. 5 illustrates an example of a map of a mine. The mine may comprise a restricted area, as indicated by the arrows. Autonomous mining vehicles, for example loaders 100, may be configured to operate at the restricted are of the mine. A route 502 may be configured for a manual vehicle 504 inside the restricted area. Manual vehicle 504 may comprise a control kit 506. Control kit 506 may be configured to be coupled to manual vehicle 504, for example upon entry to the restricted area, or earlier. Control kit 506 may comprise a positioning device configured to determine a position of the manually operated vehicle (e.g., based on SLAM). Controller 506 may comprise a transceiver, which may be configured to receive a configuration of route 502 for manual vehicle 504. The transceiver may be configured to transmit an indication of the position of manual vehicle 504 to control room system 300. According to this example, a signal may be sent by the transceiver based on which the controller 212 may determine whether the manual vehicle 504 is on the determined route 502 in the mine and to restrict movement of loaders 100 if manual vehicle 504 deviates from route 502.

FIG. 6 illustrates an example of an apparatus configured to practise one or more example embodiments. Apparatus 600 may be or comprise a mining vehicle control apparatus, such as for example a server communicatively coupled to a mining vehicle such as loader 100 or drill rig 200, control room system 300, a control apparatus located at mining vehicle such as controller 112, a mining vehicle itself, or in general any device or system configured to implement the functionality described herein. Although apparatus 600 is illustrated as a single device, it is appreciated that, wherever applicable, functions of apparatus 600 may be distributed to a plurality of devices.

Apparatus 600 may comprise at least one processor 602. The at least one processor 602 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), programmable logic controller (PLC), a hardware accelerator, a special-purpose computer chip, or the like.

Apparatus 600 may further comprise at least one memory 604. The at least one memory 604 may be configured to store, for example, computer program code or the like, for example operating system software and application software. The at least one memory 604 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 604 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 604 may be also embodied separate from apparatus 600, for example as a computer readable (storage) medium, examples of which include memory sticks, compact discs (CD), or the like.

When apparatus 600 is configured to implement some functionality, some component and/or components of apparatus 600, such as for example the at least one processor 602 and/or the at least one memory 604, may be configured to implement this functionality. Furthermore, when the at least one processor 602 is configured to implement some functionality, this functionality may be implemented using program code 606 comprised, for example, in the at least one memory 604.

The functionality described herein may be performed, at least in part, by one or more computer program product components such as software components. According to an example embodiment, apparatus 600 comprises a processor or processor circuitry, such as for example a microcontroller, configured by program code 606, when executed, to execute the embodiments of the operations and functionality described herein. Program code 606 is provided as an example of instructions which, when executed by the at least one processor 602, cause performance of apparatus 600.

For example, controller 112, 212 may be at least partially implemented as program code configured to cause apparatus 600 to perform functionality of controller 112, 212. Similarly, transmission or reception of data, e.g., data, instruction(s), signal(s), or command(s), over an internal or external communication interface of mining machine 100, 200 may be controlled by software.

Alternatively, or in addition, the functionality described herein can be performed, at least in part, by one or more hardware logic components. For example, and without limitation, illustrative types of hardware logic components that can be used include field-programmable gate arrays (FPGA), application-specific integrated circuits (ASIC), application-specific standard products (ASSP), system-on-a-chip systems (SOC), complex programmable logic devices (CPLD), graphics processing units (GPU), neural processing units (NPU), tensor processing units (TPU), or the like. Controller 112, 212 may comprise control circuitry, for example any of the above hardware logic components or a combination of at least one processor and least one memory, for implementing functionality described herein.

Apparatus 600 may comprise a communication interface 608 configured to enable apparatus 600 to transmit and/or receive information. Communication interface 608 may comprise an internal or external communication interface, such as for example a radio interface between a mining vehicle and controller 212 or an internal control bus within a mining vehicle. Apparatus 600 may further comprise other components and/or functions such as for example user interface 610 comprising at least one input device and/or at least one output device. The input device may take various forms such as a keyboard, a touch screen, or one or more embedded control buttons, joysticks, or other type of manual controllers. The output device may for example comprise a display, a speaker, or the like. User interface 610 may be configured to enable a human operator to monitor or control various functions of a mining vehicle or control room system 300.

Apparatus 600 may be configured to perform or cause performance of any aspect of the method(s) described herein. Further, a computer program or a computer program product may comprise instructions for causing, when executed by apparatus 600, apparatus 600 to perform any aspect of the method(s) described herein. Further, apparatus 600 may comprise means for performing any aspect of the method(s) described herein. In one example, the means comprises the at least one processor 602, the at least one memory 604 including program code 606 (instructions) configured to, when executed by the at least one processor 602, cause apparatus 600 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 602. Apparatus 600 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for controlling a mining machine is disclosed. The apparatus may comprise: at least one processor; and at least one memory including computer program code, the at least one memory and the computer program code configured to, when executed by the at least one processor, cause the apparatus at least to: determine a route for a manually operated vehicle, wherein at least part of the route is in a restricted area of a mine; transmit a configuration of the route to the manually operated vehicle; monitor a position of the manually operated vehicle; and cause a restriction of movement for at least one autonomous mining vehicle configured to operate in the restricted area, in response to determining that the position of the manually operated vehicle deviates from the route within the restricted area.

According to an example embodiment of the first aspect, the computer program code is further configured to, with the at least one processor, cause the apparatus to: restrict the movement of the at least one autonomous mining vehicle by causing the at least one autonomous mining vehicle to stop movement.

According to an example embodiment of the first aspect, the computer program code is further configured to, with the at least one processor: cause the restriction of the movement of the at least one autonomous mining vehicle by transmitting to the at least one autonomous mining vehicle, a command to slow down or stop movement.

According to an example embodiment of the first aspect, the computer program code is further configured to, with the at least one processor, cause the apparatus to: cause the restriction of movement for a plurality of autonomous mining vehicles configured to operate in the restricted area, in response to determining that the position of the manually operated vehicle deviates from the route within the restricted area.

According to an example embodiment of the first aspect, the computer program code is further configured to, with the at least one processor, cause the apparatus to: cause the restriction of movement for autonomous mining vehicles configured to operate in the restricted area, which autonomous mining vehicles are on the same route or in the same area as the manually operated vehicle, in response to determining that the position of the manually operated vehicle deviates from the route within the restricted area.

According to an example embodiment of the first aspect, the computer program code is further configured to, with the at least one processor, cause the apparatus to: withdraw the restriction of the movement of the autonomous mining vehicle, in response to determining that the position of the manually operated vehicle no longer deviates from the route within the restricted area of the mine.

According to an example embodiment of the first aspect, the computer program code is further configured to, with the at least one processor, cause the apparatus to: cause the restriction of the movement of the autonomous mining vehicle, in response to detecting the apparatus to have lost connection to the manually operated vehicle.

According to an example embodiment of the first aspect, the computer program code is further configured to, with the at least one processor, cause the apparatus to: receive an indication of the position of the manually operated vehicle from a positioning device configured to be coupled to the manually operated vehicle.

According to a second aspect, a system for controlling autonomous mining machines is disclosed. The system may comprise: a control room system comprising the apparatus according to the first aspect; a control kit configured to be coupled to a manually operated vehicle, the control kit comprising: a positioning device configured to determine a position of the manually operated vehicle; and a transceiver configured to receive a configuration of a route for the manually operated vehicle and to transmit an indication of the position of the manually operated vehicle to the control room system.

According to an example embodiment of the second aspect, the control room system is further configured to transmit a notification to a mobile device associated with the control kit, in response to determining that the position of the manually operated vehicle deviates from the route within a restricted area of a mine.

FIG. 7 illustrates an example of a method for controlling a mining machine, according to a third aspect of the present disclosure. The method may comprise a computer-implemented method performed by, for example, apparatus 600.

At 701, the method may comprise determining a route for a manually operated vehicle, wherein at least part of the route is in a restricted area of a mine.

At 702, the method may comprise transmitting a configuration of the route to the manually operated vehicle.

At 703, the method may comprise monitoring a position of the manually operated vehicle.

At 704, the method may comprise causing a restriction of movement for at least one autonomous mining vehicle configured to operate in the restricted area, in response to determining that the position of the manually operated vehicle deviates from the route within the restricted area.

According to an example embodiment of the third aspect, the method comprises: causing the at least one autonomous mining vehicle to stop movement.

According to an example embodiment of the third aspect, the method comprises: causing the restriction of the movement of the at least one autonomous mining vehicle by transmitting, to the at least one autonomous mining vehicle, a command to slow down or stop movement.

According to an example embodiment of the third aspect, the method comprises: causing the restriction of movement for a plurality of autonomous mining vehicles configured to operate in the restricted area, in response to determining that the position of the manually operated vehicle deviates from the route within the restricted area.

According to an example embodiment of the third aspect, the method comprises: causing the restriction of movement for autonomous mining vehicles configured to operate in the restricted area, which autonomous mining vehicles are on the same route or in the same area as the manually operated vehicle, in response to determining that the position of the manually operated vehicle deviates from the route within the restricted area.

According to an example embodiment of the third aspect, the method comprises: withdrawing the restriction of the movement of the autonomous mining vehicle, in response to determining that the position of the manually operated vehicle no longer deviates from the route within the restricted area of the mine.

According to an example embodiment of the third aspect, the method comprises: causing the restriction of the movement of the autonomous mining vehicle, in response to detecting the apparatus to have lost connection to the manually operated vehicle.

According to an example embodiment of the third aspect, the method comprises: receiving an indication of the position of the manually operated vehicle from a positioning device configured to be coupled to the manually operated vehicle.

According to a fourth aspect, a computer program, a computer program product, or a (non-transitory) computer-readable medium may comprise program instructions which, when executed by an apparatus, cause the apparatus at least to: determine a route for a manually operated vehicle, wherein at least part of the route is in a restricted area of a mine; transmit a configuration of the route to the manually operated vehicle; monitor a position of the manually operated vehicle; and cause a restriction of movement for at least one autonomous mining vehicle configured to operate in the restricted area, in response to determining that the position of the manually operated vehicle deviates from the route within the restricted area. The computer program, the computer program product, or the (non-transitory) computer-readable medium may comprise program instructions which, when executed by an apparatus, cause the apparatus to perform the method of the third aspect, or any example embodiment thereof.

According to a fifth aspect, an apparatus comprises means for determining a route for a manually operated vehicle, wherein at least part of the route is in a restricted area of a mine; means for transmitting a configuration of the route to the manually operated vehicle; means for monitoring a position of the manually operated vehicle; and means for causing a restriction of movement for at least one autonomous mining vehicle configured to operate in the restricted area, in response to determining that the position of the manually operated vehicle deviates from the route within the restricted area. The apparatus may comprise means for performing the method of the third aspect, or any example embodiment thereof.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for controlling at least one autonomous mining vehicle, the apparatus comprising:
at least one processor; and
at least one memory including program code, the at least one memory and the computer program code configured to, with the at least one processor, cause the apparatus at least to:
determine a route for a manually operated vehicle, wherein at least part of the route is in a restricted area of a mine;
transmit a configuration of the route to the manually operated vehicle;
monitor a position of the manually operated vehicle; and
cause a restriction of movement for at least one autonomous mining vehicle configured to operate in the restricted area, in response to determining that the position of the manually operated vehicle deviates from the route within the restricted area.

2. The apparatus according to claim 1, wherein the restriction of the movement of the at least one autonomous mining vehicle comprises causing the at least one autonomous mining vehicle to stop movement.

3. The apparatus according to 1 or 2, wherein the computer program code is further configured to, with the at least one processor, cause the apparatus to:
cause the restriction of the movement of the at least one autonomous mining vehicle by transmitting, to the at least one autonomous mining vehicle, a command to slow down or stop movement.

4. The apparatus according to claim 1 or 2, wherein the computer program code is further configured to, with the at least one processor, cause the apparatus to:
cause the restriction of movement for a plurality of autonomous mining vehicles configured to operate in the restricted area, in response to determining that the position of the manually operated vehicle deviates from the route within the restricted area.

5. The apparatus according to any of claim 1 or 2, wherein the computer program code is further configured to, with the at least one processor, cause the apparatus to:
cause the restriction of movement for autonomous mining vehicles configured to operate in the restricted area, which autonomous mining vehicles are on the same route or in the same area as the manually operated vehicle, in response to determining that the position of the manually operated vehicle deviates from the route within the restricted area.

6. The apparatus according to any of claims 1 to 5, wherein the computer program code is further configured to, with the at least one processor, cause the apparatus to:
withdraw the restriction of the movement of the autonomous mining vehicle, in response to determining that the position of the manually operated vehicle no longer deviates from the route within the restricted area of the mine.

7. The apparatus according to any of claims 1 to 6, wherein the computer program code is further configured to, with the at least one processor, cause the apparatus to:
cause the restriction of the movement of the autonomous mining vehicle, in response to detecting the apparatus to have lost connection to the manually operated vehicle.

8. The apparatus according to any of claims 1 to7, wherein the computer program code is further configured to, with the at least one processor, cause the apparatus to:
receive an indication of the position of the manually operated vehicle from a positioning device configured to be coupled to the manually operated vehicle.

9. A system for controlling autonomous mining machines, the system comprising:
a control room system comprising the apparatus according to any of claims 1 to 8;
a control kit configured to be coupled to a manually operated vehicle, the control kit comprising:
a positioning device configured to determine a position of the manually operated vehicle; and
a transceiver configured to receive a configuration of a route for the manually operated vehicle and to transmit an indication of the position of the manually operated vehicle to the control room system.

10. The system according to claim 11, wherein the control room system is further configured to:
transmit a notification to a mobile device associated with the control kit, in response to determining that the position of the manually operated vehicle deviates from the route within a restricted area of a mine.

11. A method for controlling autonomous mining machines, the method comprising:
determining a route for a manually operated vehicle, wherein at least part of the route is in a restricted area of a mine;
transmitting a configuration of the route to the manually operated vehicle
monitoring a position of the manually operated vehicle; and
causing a restriction of movement for at least one autonomous mining vehicle configured to operate in the restricted area, in response to determining that the position of the manually operated vehicle deviates from the route within the restricted area.

12. A computer program comprising instructions which, when executed by an apparatus, cause the apparatus at least to:
determine a route for a manually operated vehicle, wherein at least part of the route is in a restricted area of a mine;
transmit a configuration of the route to the manually operated vehicle;
monitor a position of the manually operated vehicle; and
cause a restriction of movement for at least one autonomous mining vehicle configured to operate in the restricted area, in response to determining that the position of the manually operated vehicle deviates from the route within the restricted area.
